# EUROPÄISCHE PATENTSCHRIFT

(11) **EP 0 849 151 B1**
(45) Veröffentlichungstag und Bekanntmachung des Hinweises auf die Patenterteilung: **18.12.2002**
(21) Anmeldenummer: 97118262.1
(22) Anmeldetag: 21.10.1997
(51) Int. Cl.: B62K 25/08, B62K 25/06

(54) **Teleskopisch einfederbare Radführung**
Telescopic fork suspension.
Suspension à fourche téléscopique.

(30) Priorität: 19.12.1996 DE 19653148
(43) Veröffentlichungstag der Anmeldung: 24.06.1998
(73) Patentinhaber: Bayerische Motoren Werke Aktiengesellschaft, 80788 München (DE)
(72) Erfinder: Markus, Theobald, 80995 München (DE)

(56) Entgegenhaltungen:
- DE-A- 3 725 983
- GB-A- 2 296 902

## Beschreibung

Die Erfindung betrifft eine teleskopisch einfederbare Radführung, insbesondere für ein Vorderrad eines Motorrades, nach dem Oberbegriff des Hauptanspruchs.

Die DE 37 25 983 A1 beschreibt ein Teleskopfederbein, insbesondere für Vorderradgabeln von Motorrädern oder dergleichen, mit einem als Innenrohr ausgebildeten Standrohr, einem als Außenrohr ausgebildeten Gleitrohr, welches das untere Ende des Standrohres umschließt, wobei beide ineinander in axialer Richtung gleitbar gelagert sind. Das Gleitrohr bildet einen Schmiermittelbehälter zur Aufnahme von Schmiermittel, das die Gleitfähigkeit der Verbindung von Standrohr und Gleitrohr bei deren axialer Verschiebung zueinander erhöht. Dazu wird das Gleitrohr mit Schmiermittel gefüllt und das Standrohr eingeschoben, was einen Schmiermittelpegelstand im Standrohr ergibt, der mit 9 bezeichnet ist.

Dies ist deshalb notwendig, weil die Schmierung des obersten Gleitlagers zwischen Stand- und Gleitrohr in jedem Betriebszustand gewährleistet sein muß. So werden zum Beispiel die Gabelbeine von Motorradgabeln bis zu einem entsprechenden Pegelstand mit Öl befüllt. Dies gilt auch für die Gabelbeine von Motorradgabeln, bei denen das Gleitrohr über mindestens einen, um eine rahmenfeste Fahrzeugquerachse schwenkbar angebrachten, Längslenker geführt wird, wobei sich dieser über ein Federbein rahmenfest abstützt.

Besonders für Motorradgabeln, die große Federwege ermöglichen und steif sind, also große Baulänge und Durchmesser besitzen, sind große Ölfüllmengen nötig, um die Schmierung des obersten Gleitlagers sicherzustellen. Dies erhöht das Gewicht und die Kosten der Motorradgabel. Die Gewichtserhöhung wirkt sich dabei besonders negativ aus, da sich das Gewicht des Öls im Gleitrohr zu den ungefederten Massen des Motorrads addiert.

Deshalb ist es Aufgabe der Erfindung, bei einer teleskopisch einfederbaren Radführung die Schmiermittelmenge für die gleitgelagerte Teleskopführung zwischen einem Standrohr und einem Gleitrohr zu begrenzen und damit Gewicht, insbesondere an ungefederten Teilen, einzusparen.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist bei einer teleskopisch einfederbaren Radführung mit wenigstens einem Standrohr und einem Gleitrohr, welche in axialer Richtung über mindestens ein Gleitlager ineinander teleskopisch verschiebbar geführt sind und einen Schmiermittelbehälter bilden, mindestens in einem Teilbereich des Gleit- und/oder Standrohres, wo sich mindestens ein Teil des Schmiermittels befindet, ein Formkörper eingebracht, der durch mindestens einen Teil seines Volumens die bis zu einem bestimmten Pegelstand notwendige Schmiermittelmenge verringert.

Das Einbringen eines Formkörpers in Stand- und/oder Gleitrohr einer teleskopisch einfederbaren Radführung hat den Vorteil, daß der Formkörper durch sein Volumen die Schmiermittelmenge, zum Beispiel Öl, die nötig ist einen bestimmten Pegelstand zu erreichen, verringert. Ist das spezifische Gewicht des Formkörpers leichter als das des Schmiermittels, sinkt das Gewicht der Radführung. Bei geringerem Gewicht der ungefederten Massen der Radführung verbessert sich das Federungs- und Dämpfungsverhalten der Radführung und damit das Fahrverhalten des Fahrzeugs.

Durch die Einsparung von Öl werden die Kosten geringer, wenn der Preis für den Formkörper niedriger ist.

Besonders vorteilhaft ist unter anderem eine Ausführung der Erfindung, bei der das Gleitrohr über mindestens einen, um eine rahmenfeste Fahrzeugquerachse schwenkbar angelenkten, Längslenker geführt wird, der über eine Feder- und/oder Dämpfereinrichtung fahrzeugrahmenfest abgestützt wird. Eine solche Radführung, bei der die Feder- und/oder Dämpfereinrichtung, zum Beispiel ein Federbein, nicht in der Teleskopgabel integriert ist, besitzt ein sehr großes Volumen im Standrohr und Gleitrohr, die ineinander teleskopisch geführt sind. Durch die Einbringung eines Formkörpers, zum Beispiel eines hohlen, dicht abgeschlossenen Zylinders aus einem beidseitig geschlossenen Rohr, koaxial im Gleitrohr, der sich bis ins Standrohr hineinerstreckt, kann eine große Menge Schmiermittel eingespart werden.

Bis auf einen Spalt, der nötig ist, daß sich das Standrohr im Gleitrohr frei bewegen kann, ist der Hohlraum des Gleitrohrs durch den hohlen Formkörper aus Kunststoff und/oder Aluminium ausgefüllt. Es braucht jetzt nur eine Schmiermittelmenge, zum Beispiel Öl, eingefüllt werden, die den Zwischenraum zwischen Formkörper und Gleitrohr bzw. Standrohr ausfüllt. Da der hohle Formkörper ein geringeres spezifisches Gewicht hat als das Öl, ist die Radführung insgesamt leichter.

Ein bevorzugtes Ausführungsbeispiel der Erfindung beschreibt die nachfolgende Beschreibung mit der zugehörigen Zeichnung. Es zeigen:
- Figur 1: eine teleskopisch einfederbare Radführung aus Standrohr und Gleitrohr in einem Teilschnitt und
- Figur 2: dieselbe Radführung aus Figur 1 in einem Querschnitt.

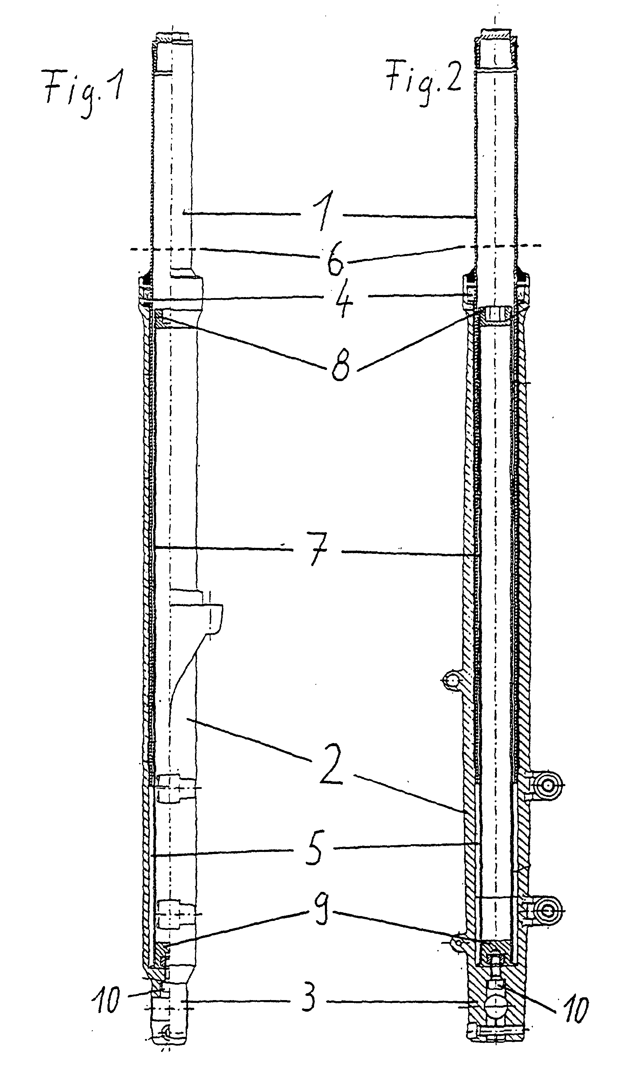

Figur 1 und Figur 2 zeigen dieselbe teleskopisch einfederbare Radführung aus einem Standrohr 1 und einem Gleitrohr 2, jeweils um 90° gedreht. Bei der Art einer teleskopischen Radführung dieses Ausführungsbeispiels ist die federnde Abstützung und die Dämpfung für ein nicht gezeichnetes Vorderrad nicht im Stand- und/oder Gleitrohr 1, 2 integriert, sondern über andere Fahrzeugteile verwirklicht. Zum Beispiel ist es möglich, das Gleitrohr 2, über einen nicht gezeichneten Längslenker, um eine nicht gezeichnete rahmenfeste Fahrzeugquerachse schwenkbar, am nicht gezeichneten Fahrzeugrahmen zu führen. Dabei kann der Kraftfluß vom Gleitrohr 2 in den Fahrzeugrahmen über eine federnde Abstützung des Längslenkers am Fahrzeugrahmen, zum Beispiel durch ein nicht gezeichnetes Federbein, erfolgen. Standrohr 1 und Gleitrohr 2 übertragen dann keine Kräfte in Axialrichtung aufeinander, sondern nur Kräfte in den Richtungen quer zu ihrer Längsachse.

Ein nicht gezeichnetes Vorderrad ist im unteren Bereich des Gleitrohrs 2 über eine Achsaufnahme 3 mit seiner nicht gezeichneten Achse befestigt. Die Federbewegung des Vorderrades wird dadurch ermöglicht, daß Standrohr 1 und Gleitrohr 2 ineinander teleskopisch verschiebbar geführt sind. Dazu ist ein Gleitlager 4 zur Führung des Standrohrs 1 im Gleitrohr 2 angebracht. Zur Schmierung des Gleitlagers 4 sind Gleitrohr 2 und Standrohr 1 mit Öl 5 befüllt, bis zu einem gestrichelt gezeichneten Pegelstand 6. Zur Verringerung der notwendigen Ölmenge zum Erreichen des Pegelstandes 6 ist innerhalb von Standrohr 1 und Gleitrohr 2 ein Formkörper eingebracht. Dieser Formkörper besteht aus einem Kunststoffrohr 7, dessen Enden durch Kunststoffbüchsen 8, 9 dichtend verschlossen sind. Das Kunststoffrohr 7 ist über die Kunststoffbüchse 9 an seinem unteren Ende durch einen Schraube 10 an das Gleitrohr 2 koaxial und abdichtend angeschraubt. Das Kunststoffrohr 7 erstreckt sich annähernd bis zum Gleitlager 4 unterhalb des Pegelstandes 6. Durch das Volumen des Formkörpers ist zum Erreichen des Pegelstandes 6 nur eine geringe Menge Öl 5 einzufüllen, da nur noch die Zwischenräume zwischen dem Kunststoffrohr 7 und dem Gleitrohr 2 bzw. Standrohr 1 aufzufüllen sind. Da das Gleitrohr 2 und damit das Öl 5 zu den ungefederten Massen der Radführung gehört, wirkt sich die Gewichtserspamis auf das Fahrverhalten besonders günstig aus.

Insbesondere bei einer Radführung, bei der im Stand- 1 und/oder Gleitrohr 2 keine Feder- und/oder Dämpferelemente enthalten sind, kann der Formkörper so groß gestaltet werden, daß sehr viel Öl 5 eingespart wird.

## Patentansprüche

1. Teleskopisch einfederbare Radführung, insbesondere für ein Vorderrad eines Motorrades, mit wenigstens einem Standrohr (1) und wenigstens einem Gleitrohr (2), welche in axialer Richtung über mindestens ein Gleitlager (4) ineinander teleskopisch verschiebbar geführt sind und einen Schmiermittelbehälter bilden, dadurch, daß ein Innenraum im Gleit- (2) und/oder Standrohr (1) mindestens teilweise mit Schmiermittel befüllt ist, **dadurch gekennzeichnet, daß** mindestens in einen Teilbereich des Gleit- (2) und/oder Standrohres (1), wo sich mindestens ein Teil des Schmiermittels befindet, ein Formkörper (7) eingebracht ist, der durch mindestens einen Teil seines Volumens, die bis zu einem bestimmten Pegelstand (6) notwendige Schmiermittelmenge verringert.

2. Teleskopisch einfederbare Radführung nach Anspruch 1, **dadurch gekennzeichnet, daß** der Formkörper hohl und dicht abgeschlossen ist.

3. Teleskopisch einfederbare Radführung nach Anspruch 2, **dadurch gekennzeichnet, daß** der Formkörper ein Hohlzylinder ist.

4. Teleskopisch einfederbare Radführung nach Anspruch 3, **dadurch gekennzeichnet, daß** der Hohlzylinder aus einem beidseitig geschlossenen Rohr (7) besteht.

5. Teleskopisch einfederbare Radführung nach einem der Ansprüche 1 bis 4, **dadurch gekennzeichnet, daß** der Formkörper im Gleitrohr (2) angebracht ist.

6. Teleskopisch einfederbare Radführung nach Anspruch 5, **dadurch gekennzeichnet, daß** der Formkörper koaxial zum Gleitrohr (2) angebracht ist.

7. Teleskopisch einfederbare Radführung nach einem der Ansprüche 5 oder 6, **dadurch gekennzeichnet, daß** sich der Formkörper bis ins Standrohr (1) hinein erstreckt.

8. Teleskopisch einfederbare Radführung nach einem der Ansprüche 5 bis 7, **dadurch gekennzeichnet, daß** die Länge des Formkörpers so gewählt ist, daß sich dieser innerhalb des Gleitrohrs (2), bis etwas unterhalb dessen Öffnung erstreckt.

9. Teleskopisch einfederbare Radführung nach einem der Ansprüche 1 bis 8, **dadurch gekennzeichnet, daß** der Formkörper aus Kunststoff und/oder aus Aluminium besteht.

10. Teleskopisch einfederbare Radführung nach einem der Ansprüche 1 bis 9, **dadurch gekennzeichnet, daß** das Gleitrohr (2) über mindestens einen, um eine rahmenfeste Fahrzeugquerachse schwenkbar angebrachten, Längslenker geführt wird, der über eine Feder- und/oder Dämpfereinrichtung rahmenfest abgestützt ist.

## Claims

1. A telescopic spring-operated wheel guide, especially for a front wheel of a motorcycle, comprising at least one vertical tube (1) and at least one sliding tube (2) telescopically movable in one another in the axial direction via at least one sliding bearing (4) and constituting a lubricant container in that a space inside the sliding tube (2) and/or the vertical tube (1) is at least partly filled with lubricant, **characterised in that** a moulded member (7) is inserted into at least a component region of the sliding tube (2) and/or the vertical tube (1) containing at least some of the lubricant, and at least a part of the volume of the moulded member reduces the amount of lubricant required to reach a given level (6).

2. A telescopic spring-operated wheel guide according to claim 1, **characterised in that** the moulded member is hollow and tightly closed.

3. A telescopic spring-operated wheel guide according to claim 2, **characterised in that** the moulded member is a hollow cylinder.

4. A telescopic spring-operated wheel guide according to claim 3, **characterised in that** the hollow cylinder comprises a tube (7) closed at both ends.

5. A telescopic spring-operated wheel guide according to any of claims 1 to 4, **characterised in that** the moulded member is disposed in the sliding tube (2).

6. A telescopic spring-operated wheel guide according to claim 5, **characterised in that** the moulded member is disposed coaxially with the sliding tube (2).

7. A telescopic spring-operated wheel guide according to claim 5 or 6, **characterised in that** the moulded member extends into the vertical tube (1).

8. A telescopic spring-operated wheel guide according to any of claims 5 to 7, **characterised in that** the length of the moulded member is chosen so that it extends inside the sliding tube (2) up to just below the opening thereof.

9. A telescopic spring-operated wheel guide according to any of claims 1 to 8, **characterised in that** the moulded member is made of plastics material and/or aluminium.

10. A telescopic spring-operated wheel guide according to any of claims 1 to 9, **characterised in that** the sliding tube (2) is guided by at least one longitudinal control lever mounted for pivoting around a transverse axis or shaft of the vehicle fixed to the frame and braced against the frame via a spring and/or shock-absorbing device.

## Revendications

1. Suspension télescopique de roue, notamment pour la roue avant d'une roue de motocycle, comportant au moins un tube fixe (1) et au moins un tube coulissant (2) qui coulissent l'un dans l'autre de manière télescopique dans la direction axiale par l'intermédiaire d'au moins un palier lisse (4), et qui forment un réservoir à agent lubrifiant, en ce que le volume intérieur du tube coulissant (2) et/ou du tube fixe (1) est rempli au moins en partie d'un agent lubrifiant,
**caractérisée en ce que**
dans au moins une partie du tube coulissant (2) et/ou du tube fixe (1), là où se trouve au moins une partie de l'agent lubrifiant, on a placé un corps de forme (7) qui diminue par au moins une partie de son volume, la quantité d'agent lubrifiant nécessaire jusqu'alors pour atteindre un niveau de remplissage prédéterminé (6).

2. Suspension télescopique de roue selon la revendication 1,
**caractérisée en ce que**
le corps de forme est creux et fermé de manière étanche.

3. Suspension télescopique de roue selon la revendication 2,
**caractérisée en ce que**
le corps de forme est un cylindre creux.

4. Suspension télescopique de roue selon la revendication 3,
**caractérisée en ce que**
le cylindre creux est un tube (7) dont les deux extrémités sont fermées.

5. Suspension télescopique de roue selon l'une des revendications 1 à 4,
**caractérisée en ce que**
le corps de forme est prévu dans le tube coulissant (2).

6. Suspension télescopique de roue selon la revendication 5,
**caractérisée en ce que**
le corps de forme est installé coaxialement au tube coulissant (2).

7. Suspension télescopique de roue selon l'une des revendications 5 ou 6,
**caractérisée en ce que**
le corps de forme est engagé jusqu'au tube fixe (1).

8. Suspension télescopique de roue selon l'une des revendications 5 à 7,
**caractérisée en ce que**
la longueur du corps de forme est choisie pour arriver à l'intérieur du tube coulissant (2) sensiblement jusqu'en dessous de son ouverture.

9. Suspension télescopique de roue selon l'une des revendications 1 à 8,
**caractérisée en ce que**
le corps de forme est en matière plastique et/ou en aluminium.

10. Suspension télescopique de roue selon l'une des revendications 1 à 9,
**caractérisée en ce que**
le tube coulissant (2) est guidé par au moins un bras longitudinal monté pivotant autour d'un axe transversal solidaire du châssis du véhicule, ce bras étant appuyé solidairement au châssis par une installation de ressort et/ou d'amortissement.
